(19) **Europäisches Patentamt**
**European Patent Office**
**Office européen des brevets**

(11) **EP 1 609 277 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **04724982.6**

(22) Anmeldetag: **01.04.2004**

(51) Int Cl.:
*H04W 4/12* *(2009.01)*     *H04L 12/58* *(2006.01)*

(86) Internationale Anmeldenummer:
**PCT/DE2004/000702**

(87) Internationale Veröffentlichungsnummer:
**WO 2004/088942 (14.10.2004 Gazette 2004/42)**

(54) **VERFAHREN ZUR SOFORTIGEN ZUSTELLUNG VON EMAILS AN TELEKOMMUNIKATIONSENDGERÄTE**

METHOD FOR IMMEDIATELY TRANSMITTING ELECTRONIC MESSAGES TO TELECOMMUNICATION TERMINALS

PROCEDE DE TRANSMISSION IMMEDIATE DE MESSAGES ELECTRONIQUES A DES TERMINAUX DE TELECOMMUNICATION

(84) Benannte Vertragsstaaten:
**AT BE BG CH CY CZ DE DK EE ES FI FR GB GR HU IE IT LI LU MC NL PL PT RO SE SI SK TR**

(30) Priorität: **01.04.2003   DE 10314915**

(43) Veröffentlichungstag der Anmeldung:
**28.12.2005   Patentblatt 2005/52**

(73) Patentinhaber: **T-Mobile Deutschland GmbH**
**53227 Bonn (DE)**

(72) Erfinder:
• **DAFFNER, Klaus**
**63225 Langen (DE)**
• **DARPEL, Hendrik**
**50668 Köln (DE)**
• **HAKE, Jens**
**09235 Burkhardtsdorf (DE)**

(74) Vertreter: **Riebling, Peter**
**Patentanwalt**
**Postfach 31 60**
**88113 Lindau (DE)**

(56) Entgegenhaltungen:
**EP-A- 1 096 725        WO-A-02/063839**
**WO-A-2004/017583    DE-U- 20 009 110**

**Beschreibung**

Die Erfindung betrifft ein Verfahren zur sofortigen Zustellung (Push-Zustellung) von Emails an Telekommunikationsendgeräte mit Hilfe mindestens eines Telekommunikationsnetzes. Hierbei kann es sich um mobile als auch fest installierte Telekommunikationsendgeräte handeln

Gewöhnlich beruht die Abfrage von Emails auf dem Pull-Prinzip, das heißt es muss in gewissen Zeitintervallen (manuell oder automatisch) bei einem Email-Server abgefragt werden, ob neue Email-Nachrichten eingegangen sind. Das kostet den Abfragenden einerseits unnötig Geld, wenn keine Nachrichten vorliegen, andererseits werden Emails entsprechend der Abfrageperiode nur verzögert zugestellt.

Zu den neuen Datendiensten gehören sogenannte Push-Dienste. Diese übermitteln, im Gegensatz zu dem im Internet üblichen Pull-Prinzip, unaufgefordert Informationen an entsprechende Endgeräte. Ein Beispiel für Push-Technologie bei mobilen Endgeräten ist die vielbenutzte SMS (Short Message Service). Wenig bekannt sind hingegen noch MMS (Multimedia Messaging Service) und Push-Dienste über das Wireless Application Protocol (WAP), die sich beispielsweise für die Systemüberwachung nutzen lassen.

Systeme, die Emails direkt an mobile Clients zustellen, werden derzeit von einigen wenigen Herstellern auf Grundlage proprietärer Protokolle angeboten. Diese erfordern allerdings eine spezielle IT-Infrastruktur beim Endteilnehmer und spezielle Mobilfunkendgeräte. Ein Beispiel dafür ist das Kommunikationsendgerät mit der Bezeichnung "Blackberry" der Fa. RIM (Research In Motion).

Die Schriften WO 02/063839 A, DE 200 09 110 U und EP 1 096 725 A offenbaren Verfahren und Systeme zur Übertragung von MMS und E-Mail Nachrichten im Push-Verfahren. Es ist beschrieben MMS über herkömmliche MMS Systeme und Emails mittels des Unified Messaging Service (UMS) zu übertragen.

Die Aufgabe der Erfindung besteht in der Bereitstellung eines Verfahrens und einer Vorrichtung zur sofortigen Email Zustellung, das beim Endteilnehmer keine zusätzliche IT-Infrastruktur erfordert. Dieses System soll zu herkömmlichen Festenetz- und Mobilfunkendgeräten, PDAs oder Smartphones kompatibel sein und auf offenen Standards basieren.

Diese Aufgabe wird erfindungsgemäß durch die Merkmale der unabhängigen Patentansprüche gelöst. Vorteilhafte Ausgestaltungen und Weiterbildungen der Erfindung sind in den Unteransprüchen angegeben.

Das hier dargestellte Verfahren sieht vor, eingehende Emails über herkömmliche und bereits in mobilen Telekommunikationsnetzen vorhandene MMS- oder WAP-Push-Systeme auf das Telekommunikationsendgerät des Teilnehmers direkt zuzustellen.

In einer bevorzugten Ausgestaltung der Erfindung ist zusätzlich zum Email Server des Email-Anbieters ein spezieller Push Mail Server vorgesehen. Zur Nutzung des Push Mail Dienstes muss der Teilnehmer beim Email Server eine Weiterleitung einrichten, so dass eingehende Emails an eine speziell eingerichtete "PushEmail"-Adresse (z.B. 491711234567@pushmail.t-mobile.de) des Push Mail Servers weitergeleitet werden. Der Push Mail Server stellt die Emails automatisch an den Email Client auf dem Endgerät zur Bearbeitung zu.

Für jeden Teilnehmer muss ein Teilnehmerkonto in Form einer Datenbank auf dem Push Mail Server eingerichtet werden. Bestandteil dieses Teilnehmerkontos ist mindestens die Rufnummer des gewünschten Endgerätes (oder auch mehrerer Endgeräte) des Teilnehmers, auf welche die Push Emails zugestellt werden sollen, und die originäre Emailadresse des Teilnehmers.

Gemäß einer vereinfachten Ausgestaltung der Erfindung kann auf die Einrichtung einer Datenbank verzichtet werden. Durch eine spezielle Gestaltung der "PushMail" Adresse (z.B. 491711234567@pushmail.t-mobile.de) kann die Rufnummer des Empfängers vom Push Mail Server einfach aus der "PushMail" Adresse ermittelt werden.

Der Push Mail Server ist an das MMS- oder WAP-Push- System des verwendeten Fest- oder Mobiltelekommunikationsnetzes angebunden, in vorteilhafter Weise über einen sogenannten Large Account, das heißt einen MMS- oder WAP-Push Zugang für die Übertragung eines großen Datenvolumens.

Ferner muss der Push Mail Server die Email in einem geeigneten Content Type kapseln, so dass sie mittels MMS- oder WAP-Push-Format übertragbar ist. Besonders geeignet ist der dafür in den Internet-Standards bereits spezifizierte Content Type "message/rfc822". Im RFC 822 wird ein Format zum Austausch von textbasierten Emails im Internet beschrieben. Diese Nachrichten werden dabei hauptsächlich in einen Body und einen Header eingeteilt. Der Body einer Nachricht ist die eigentliche Information die man verschicken möchte. Der Inhalt kann dabei eine beliebige Kombination aus ASCII-Zeichen sein, man muss sich nicht an Syntax-Regeln halten. Der Header enthält unter anderem Informationen über den (die) Empfänger, den Absender, Priorität, Zeitpunkt des Absendens, Art der Codierung usw. Diese Informationen sind jeweils in Header-Feldern abgelegt.

In einer Weiterbildung der Erfindung kann der Push Mail Server zusätzlich einen Vergebührungsmechanismus besitzen, der in der Lage ist, Gebührentickets für das Vergebührungssystem von Telekommunikationsnetzbetreibern oder anderen Diensteanbietern zu erzeugen.

Gemäß einer anderen Ausgestaltung der Erfindung, wird die Funktion des Push Mail Servers direkt in den vorhandenen Email-Server integriert. Hierbei kann die Gestaltung des Teilnehmerkontos entweder ganz entfallen oder zumindest vereinfacht werden, da die Speicherung der originären Emailadresse nicht mehr erforderlich ist. Ebenso ist das Einrichten einer speziellen "PushEmail"-Adresse nicht mehr erforderlich, das heißt die explizite Weiterleitung eingehender Emails an eine spezielle "PushEmail"-Adresse kann entfallen, wenn der benutzte Email-Server die Funktionalität des Push Mail Servers integriert hat.

Der im Endgerät verwendete Push Email Client kann ein herkömmlicher WAP-Client oder MMS-Client sein, der dahingehend erweitert wird, dass gekapselte Emails detektiert werden. Bei einer Detektion von Nachrichteninhalten, die mit dem oben genannten speziellen Content Type, z.B. "message/rfc822" gekapselt wurden, wird die darin enthaltene Email extrahiert und an den Email Client des Endgeräts übergeben.

Der bestehende Email Server muss generell eine automatische Weiterleitung der eingehenden Emails unterstützen, damit die Emails an den Push Mail Server weiter geleitet werden können. Durch Anwendung von Weiterleitungsregeln kann die Weiterleitung von unerwünschten Emails verhindert werden. d.h. der Teilnehmer kann festlegen, welche Emails als Push Email und welche auf herkömmliche Weise behandelt werden.

Im Falle, dass der Email-Server die Funktion des Push Mail-Servers integriert hat, kann eine geeignete Funktion zur Ausfilterung der Emails, die auf den mobilen Client zugestellt werden sollen, vorhanden sein.

Ein Ausführungsbeispiel des erfindungsgemäßen Verfahrens wird nachfolgend anhand der Zeichnungsfigur erläutert.

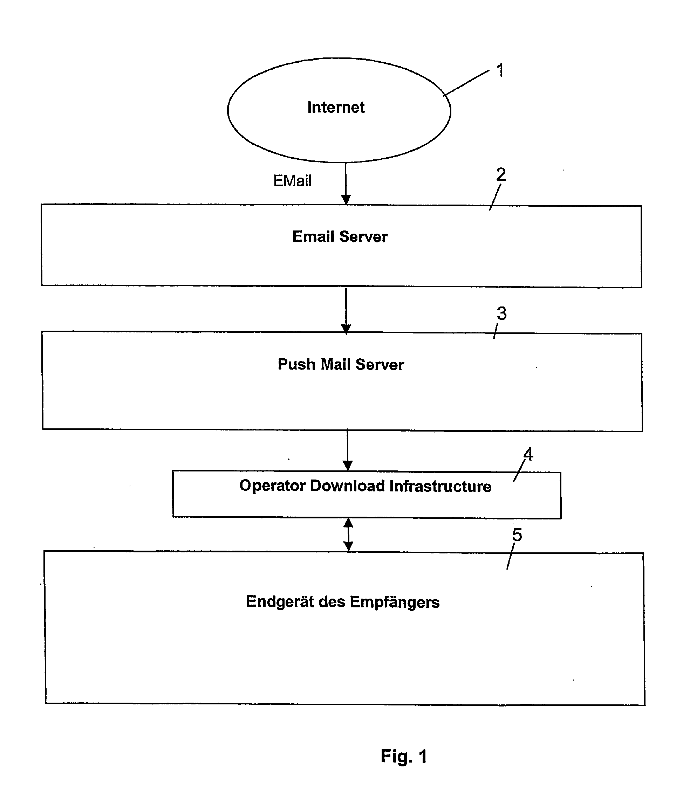

Figur 1 zeigt beispielhaft einen möglichen Verfahrensablauf in einem Mobilkommunikationssystem.

Eine von einem Absender stammende Email wird über das Internet 1 an einen Email Server 2 des Empfängers übertragen.

Vom Email Server 2 wird die Email an eine für den Empfänger eingerichtete Emailadresse auf einem Push Mail Server 3 weitergeleitet. Der Empfänger kann beim Email-Server 2 Regeln definieren, aufgrund derer die Emails an seine Emailadresse auf dem Push Mail Server 3 weitergeleitet werden. Die Regeln bestimmen Kriterien, zum Beispiel Größe der Nachricht, Anzahl der Nachrichten, Absender, etc., nach denen die Email an den Push Mail Server 3 weitergeleitet werden.

Die Email wird unter Berücksichtigung der Weiterleitungsregeln an den Push Mail Server 3 weitergeleitet

Der Push Mail Server 3 ermittelt die Rufnummer des Empfängers, in der Regel die Rufnummer eines Mobilkommunikationsgeräts, aus einer Datenbank mit Teilnehmerdaten. Anstatt aus einer Datenbank kann die Rufnummer des Empfängers auch aus der Empfängeradresse der weitergeleiteten Email ermitteln werden. Die Email wird in eine Nachricht mit geeignetem Content Type gekapselt, z. B. Kapselung mit Content Type "message/rfc822".

Die gekapselte Email wird in die Download Infrastruktur 4 des Betreibers des Kommunikationsnetzes weitergeleitet. Die Download Infrastruktur kann die folgenden Netzkomponenten umfassen: MMSC (Multimedia Messging Service Center), WAP Gateway, Push Proxy und SMSC (Short Message Service Center); je nachdem, ob die Email über einen MMS- oder WAP-Push Dienst übertragen wird.

Die gekapselte Email wird auf herkömmliche Weise dem Endgerät 5 des Empfängers als MMS- oder WAP-Push-Download zugestellt.

Im Endgerät 5 wird die gekapselte Nachricht empfangen. Der endgeräteseitige WAP-oder MMS-Client muss den entsprechenden Content Type detektieren, z. B. "message/ rfc822", und den Nachrichteninhalt des entsprechenden Content Types auspacken und an den jeweiligen lokal installierten Email Client übergeben. Der Email Client signalisiert dem Empfänger das Vorhandensein einer neuen Nachricht.

**Zeichnungslegende**

1 Internet

2 Email Server:

    Teilnehmer definiert hier die Regeln, aufgrund derer die Emails an seine Emailadresse auf einem Push Mail Server weitergeleitet werden (Grösse der Nachricht, Anzahl der Nachrichten, Absender, ...)

3 Push Mail Server

- Rufnummer des Empfängers aus Datenbank mit Kundendaten (oder auch aus der Empfängeradresse der weitergeleiteten Email) ermitteln
- Email in Nachricht mit geeignetem Content Type kapseln (z.B. Kapselung mit Content Type "message/rfc822")

4 Operator Download Infrastructure

## MMSC + WAP GW + Push Proxy + SMSC

5 Endgerät des Empfängers

- Gekapselte Nachricht empfangen
- WAP- o. MMS-Client muss entsprechenden Content Type detektieren (z.B. "message/ rfc822").
- Nachrichteninhalt des entsprechenden Content Types auspacken und an den jeweiligen lokal installierten Email Client übergeben
- Email Client signalisiert dem Empfänger das Vorhandensein einer neuen Nachricht.

**Patentansprüche**

1. Verfahren zur sofortigen Zustellung von Emails auf ein Telekommunikationsgerät eines Empfängers (5) mit Hilfe mindestens eines Telekommunikationsnetzes, bei dem die Emails von einem Absender über einen Email Server (2) an den Empfänger übermittelt werden,
   **dadurch gekennzeichnet,**
   **dass** die Emails über herkömmliche MMS- oder WAP-Push-Systeme dem Telekommunikationsendgerät des Empfängers (5) zugestellt werden, indem eine Email anhand der Email Adresse des Empfängers vom Email Server (2) an einen speziell eingerichteten Push Mail Server (3) weitergeleitet wird, dass der Push Mail Server (3) die Email in einem geeigneten Content Type kapselt, so dass sie mittels MMS- oder WAP-Push-Format übertragbar ist, und dass die Emails von dort anhand einer in der Email enthaltenen oder aus einer Datenbasis ermittelten Rufnummer über herkömmliche MMS- oder WAP-Push-Dienste dem Telekommunikationsendgerät (5) zugestellt werden, wobei im Telekommunikationsendgerät ein herkömmlicher WAP-Client oder MMS-Client installiert ist, der gekapselte Emails detektiert und verarbeitet, und bei Detektion von mit dem speziellen Content Type gekapselten Nachrichteninhalten die darin enthaltene Email extrahiert und an den Email Client des Telekommunikationsendgeräts (5) übergibt.

2. Verfahren nach Anspruch 1, **dadurch gekennzeichnet, dass** für jeden Teilnehmer ein Teilnehmerkonto auf dem Push Mail Server (3) eingerichtet wird, das wenigstens die Rufnummer mindestens eines Telekommunikationsendgeräts (5) und die originäre Email-Adresse des Empfängers enthält.

3. Verfahren nach einem der vorhergehenden Ansprüche, **dadurch gekennzeichnet, dass** durch eine Einrichtung und Anwendung von Weiterleitungsregeln die Weiterleitung der Emails vom Email Server (2) an den Push Mail Server (3) gesteuert wird.

4. Verfahren nach einem der vorhergehenden Ansprüche, **dadurch gekennzeichnet, dass** der Push Mail Server (3) die Rufnummer des Telekommunikationsendgeräts des Empfängers aus der für die Weiterleitung verwendeten Push-Mail Adresse ermittelt.

5. Verfahren nach einem der vorhergehenden Ansprüche, **dadurch gekennzeichnet, dass** der Push Mail Server (3) an das MMS- oder WAP-Push-System des verwendeten Telekommunikationsnetzes angebunden ist.

6. Verfahren nach einem der vorhergehenden Ansprüche, **dadurch gekennzeichnet, dass** die Funktion des Push Mail Servers (3) direkt in den vorhandenen Email-Server (2) integriert ist.

7. Verfahren nach einem der vorhergehenden Ansprüche, **dadurch gekennzeichnet, dass** als Content Type "message/rfc822" verwendet wird.

8. Verfahren nach einem der vorhergehenden Ansprüche, **dadurch gekennzeichnet, dass** der Push Mail Server (3) einen Vergebührungsmechanismus besitzt mit dem Gebührentickets für das Vergebührungssystem von Telekommunikationsnetzbetreibern oder anderen Diensteanbietern erzeugen werden.

9. Vorrichtung zur sofortigen Zustellung von Emails auf ein Telekommunikationsgerät (5) eines Empfängers, welche umfasst:

ein über MMS- oder WAP-Push-Systeme verfügendes Telekommunikationsnetz,

das Telekommunikationsgerät (5) des Empfängers, an welches die Emails zustellbar sind, und

einen Email Server (2) zum Übermitteln der Emails von einem Absender an das Telekommunikationsendgerät (5) des Empfängers,

**gekennzeichnet durch**

einen mit dem Email Server (2) verbundenen Push Mail Server (3) zur sofortigen Zustellung von einer beim Email Server (2) eingehenden Email an das Kommunikationsendgerät (5) des Empfängers,

wobei der Push Mail Server (3) Mittel zur Kapselung der Email in einen geeigneten Content Type umfasst, so dass sie mittels MMS- oder WAP-Push-Format übertragbar ist, und

wobei im Telekommunikationsendgerät ein herkömmlicher WAP-Client oder

MMS-Client installiert ist, der gekapselte Emails detektiert und verarbeitet, und

bei Detektion von mit dem speziellen Content Type gekapselten Nachrichteninhalten die darin enthaltene Email extrahiert und an den Email Client des Telekommunikationsendgeräts (5) des Empfängers übergibt.

10. Vorrichtung nach Anspruch 9, **dadurch gekennzeichnet, dass** das Telekommunikationsendgerät ein mobiles Telekommunikationsendgerät ist.

11. Vorrichtung nach Anspruch 9, **dadurch gekennzeichnet, dass** das Telekommunikationsendgerät ein Festnetz-Telekommunikationsendgerät ist.

**Claims**

1. Method for the immediate delivery of e-mails to a telecommunications device of an addressee (5) by means of at least one telecommunications network, in which the e-mails are transmitted from a sender via an e-mail server (2) to the addressee, **characterised in that** the e-mails are delivered via conventional MMS or WAP push systems to the telecommunications terminal of the addressee (5) by the fact that an e-mail is forwarded with the aid of the e-mail address of the addressee from the e-mail server (2) to a specially designed push mail server (3), **in that** the push mail server (3) encapsulates the e-mail in a suitable content type so that it can be transmitted by means of MMS or WAP push format, and **in that** from there the e-mails are delivered to the telecommunications terminal (5) via conventional MMS or WAP push services with the aid of a telephone number contained in the e-mail or determined from a database, wherein in the telecommunications terminal is installed a conventional WAP client or MMS client which detects and processes encapsulated e-mails, and upon detection of message contents encapsulated with the special content type, the e-mail contained therein is extracted and delivered to the e-mail client of the telecommunications terminal (5).

2. Method according to claim 1, **characterised in that** for each subscriber a subscriber account is set up on the push mail server (3), which contains at least the telephone number of at least one telecommunications terminal (5) and the original e-mail address of the addressee.

3. Method according to one of the preceding claims, **characterised in that** forwarding of the e-mails from the e-mail server (2) to the push mail server (3) is controlled by establishment and application of forwarding rules.

4. Method according to one of the preceding claims, **characterised in that** the push mail server (3) determines the telephone number of the telecommunications terminal of the addressee from the push mail address used for forwarding.

5. Method according to one of the preceding claims, **characterised in that** the push mail server (3) is connected to the MMS or WAP push system of the telecommunications network used.

6. Method according to one of the preceding claims, **characterised in that** the function of the push mail server (3) is directly integrated in the existing e-mail server (2).

7. Method according to one of the preceding claims, **characterised in that** "message/rfc822" is used as the content type.

8. Method according to one of the preceding claims, **characterised in that** the push mail server (3) has a charging mechanism with which charge tickets for the charging system of telecommunications network operators or other service providers are generated.

9. Apparatus for the immediate delivery of e-mails to a telecommunications device (5) of an addressee, which comprises: a telecommunications network having MMS or WAP push systems, the telecommunications device (5) of the addressee to which the e-mails can be delivered, and an e-mail server (2) for transmitting the e-mails from a sender to the telecommunications terminal (5) of the addressee, **characterised by** a push mail server (3) connected to the e-mail server (2) for the immediate delivery of an e-mail received by the e-mail server (2) to the communications terminal (5) of the addressee, wherein the push mail server (3) comprises means for encapsulation of the e-mail in a suitable content type, so that it can be transmitted by means of MMS or WAP push format, and wherein in the telecommunications terminal is installed a conventional WAP client or MMS client which detects and processes encapsulated e-mails, and upon detection of message contents encapsulated with the special content type, the e-mail contained therein is extracted and delivered to the e-mail client of the telecommunications terminal (5) of the addressee.

10. Apparatus according to claim 9, **characterised in that** the telecommunications terminal is a mobile telecommunications terminal.

11. Apparatus according to claim 9, **characterised in that** the telecommunications terminal is a fixed-network telecommunications terminal.

## Revendications

1. Procédé pour la transmission immédiate de courriers électroniques à un terminal de télécommunication d'un destinataire (5) à l'aide d'au moins un réseau de télécommunication, selon lequel les courriers électroniques sont envoyés par un expéditeur au destinataire par l'intermédiaire d'un serveur de courrier électronique (2), **caractérisé en ce que** les courriers électroniques sont transmis au terminal de télécommunication du destinataire (5) par l'intermédiaire de systèmes MMS ou WAP Push classiques, grâce au fait qu'un courrier électronique est redirigé par le serveur de courrier électronique (2), à l'aide de l'adresse électronique du destinataire, vers un serveur Push Mail (3) installé spécialement, **en ce que** le serveur Push Mail (3) encapsule le courrier électronique dans un type de contenu approprié, pour qu'il puisse être transmis à l'aide d'un format MMS ou WAP Push, et **en ce que** les courriers électroniques, de là, sont transmis au terminal de télécommunication (5) par l'intermédiaire de services MMS ou WAP Push classiques à l'aide d'un numéro d'appel contenu dans ledit courrier ou déterminé à partir d'une base de données, étant précisé qu'il est prévu, installé dans un terminal de télécommunication, un client WAP ou MMS classique qui détecte et traite les courriers électroniques encapsulés et, en cas de détection de contenus de messages encapsulés avec le type de contenu spécial, extrait le courrier électronique contenu dans celui-ci et le transmet au client électronique du terminal de télécommunication (5).

2. Procédé selon la revendication 1, **caractérisé en ce que** pour chaque abonné est installé sur le serveur Push Mail (3) un compte d'abonné qui contient au moins le numéro d'appel d'au moins un terminal de télécommunication (5) et l'adresse électronique d'origine du destinataire.

3. Procédé selon l'une des revendications précédentes, **caractérisé en ce que** la transmission des courriers électroniques du serveur de courrier électronique (2) vers le serveur Push Mail (3) est commandée grâce à une mise en place et à une application de règles de transmission.

4. Procédé selon l'une des revendications précédentes, **caractérisé en ce que** le serveur Push Mail (3) détermine le numéro d'appel du terminal de télécommunication du destinataire à partir de l'adresse Push Mail utilisée pour la transmission.

5. Procédé selon l'une des revendications précédentes, **caractérisé en ce que** le serveur Push Mail (3) est relié au système MMS ou WAP Push du réseau de télécommunication utilisé.

6. Procédé selon l'une des revendications précédentes, **caractérisé en ce que** la fonction du serveur Push Mail (3) est intégrée directement dans le serveur de courrier électronique (2) existant.

7. Procédé selon l'une des revendications précédentes, **caractérisé en ce qu'**on utilise comme type de contenu "message/rfc822".

**8.** Procédé selon l'une des revendications précédentes, **caractérisé en ce que** le serveur Push Mail (3) a un mécanisme de facturation grâce auquel sont générés des tickets de facturation pour le système de facturation d'exploitants de réseau de télécommunication ou d'autres prestataires de services.

**9.** Dispositif pour la transmission immédiate de courriers électroniques à un terminal de télécommunication (5) d'un destinataire, qui comprend :

un réseau de télécommunication qui dispose de systèmes MMS ou WAP Push,
le terminal de télécommunication (5) du destinataire auquel les courriers électroniques sont aptes à être transmis, et
un serveur de courrier électronique (2) pour transmettre les courriers électroniques d'un expéditeur au terminal de télécommunication (5) du destinataire,
**caractérisé par** un serveur Push Mail (3) relié au serveur de courrier électrique (2) et destiné à transmettre immédiatement au terminal de télécommunication (5) du destinataire un courrier électronique qui arrive dans le serveur (2),
étant précisé que le serveur Push Mail (3) comprend des moyens pour encapsuler le courrier électronique dans un type de contenu approprié, pour qu'il puisse être transmis à l'aide d'un format MMS ou WAP Push, et
que dans le terminal de télécommunication est installé un client WAP ou MMS classique qui détecte et traite les courriers électroniques encapsulés et, en cas de détection de contenus de messages encapsulés avec le type de contenu spécial, extrait le courrier électronique contenu dans celui-ci et l'envoie au client électronique du terminal de télécommunication (5) du destinataire.

**10.** Dispositif selon la revendication 9, **caractérisé en ce que** le terminal de télécommunication est un terminal de télécommunication mobile.

**11.** Dispositif selon la revendication 9, **caractérisé en ce que** le terminal de télécommunication est un terminal de télécommunication de réseau fixe.

Fig. 1

**EP 1 609 277 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02063839 A
- DE 20009110 U
- EP 1096725 A